# EUROPÄISCHE PATENTSCHRIFT

(11) **EP 0 554 532 B1**
(45) Veröffentlichungstag und Bekanntmachung des Hinweises auf die Patenterteilung: **06.09.1995**
(21) Anmeldenummer: 92119418.9
(22) Anmeldetag: 13.11.1992
(51) Int. Cl.: B60C 27/14

(54) **Gleitschutz für Fahrzeugräder**
Traction device for car wheels
Dispositif anti-dérapant pour roues de véhicules

(30) Priorität: 04.02.1992 DE 4203078
(43) Veröffentlichungstag der Anmeldung: 11.08.1993
(73) Patentinhaber: Confon AG, CH-9424 Rheineck (CH)
(72) Erfinder: Preusker, Werner Johann, W-7793 Sauldorf (DE)
(74) Vertreter: COHAUSZ HASE DAWIDOWICZ & PARTNER

(56) Entgegenhaltungen:
- EP-A- 0 189 505
- FR-A- 1 520 579

## Beschreibung

Die Erfindung betrifft einen Gleitschutz für Fahrzeugräder mit einer an einer Seite der Radfelge oder der Radscheibe koaxial befestigten Haltevorrichtung, die durch über die Radlauffläche greifende quer zur Laufrichtung liegende Arme ein auf der Radlauffläche aufliegendes Gleitschutzmittel hält, wobei das Gleitschutzmittel auf der der Haltevorrichtung abgewandten Seite als auch auf der zugewandten Seite jeweils in einer Öffnung des Arms gehalten ist und im Bereich der Reifenstandfläche zur Seite beweglich ist,
Wird ein solcher Gleitschutz auf ein Rad eines stehenden Kraftfahrzeuges von der Seite aufgeschoben, so kann der Gleitschutz nicht unter die Reifenstandfläche gelangen, ohne das Rad anzuheben oder zu bewegen. Nach der Montage liegt damit ein Bereich des Gleitschutzes neben der Radstandfläche, d.h. dieser Gleitschutzbereich muß während der Montage genügend weit zur Seite hin ausweichen können. Erst nach der Montage und während des Anfahrens des Kraftfahrzeuges verschiebt sich dann dieser Bereich selbsttätig auf die Radlauffläche.

Eine derartige Gleitschutzvorrichtung ist durch die EP 01 89 505 bekannt. Die Gleitschutzvorrichtung besteht dabei aus einer an der Radfelge eines Kraftfahrzeuges montierbaren und an dieser während der Wintermonate verbleibenden Befestigungsscheibe und einer mit dieser mittels eines Sicherungsringes bei Inbetriebnahme der Gleitschutzvorrichtung verriegelbaren, auf die Befestigungsscheibe aufsetzbaren Tragscheibe mit einer Anzahl von radial angeordneten, die Reifenlauffläche übergreifenden Tragarmen, die ein Kettennetz als Schneekette tragen, das im Betriebszustand die Reifenlauffläche übergreift. Dabei bilden zwei Tragarme eine Radeingriffsöffnung, wobei an den die Radeingriffsöffnung bildenden Seiten Bügel befestigt sind und die Bügel von jeweils einem das eine Ende der verschiebbaren Kette bildenden Kettengliedes umfaßt ist. Bei der Montage wird die an den Bügeln verschieblich gelagerte Kette zur Befestigungsscheibe hin verschoben, so daß sich eine Radeingriffsöffnung bildet und die Gleitschutzvorrichtung an der Radfelge des Kraftfahrzeuges montierbar ist. Sobald sich das Fahrzeug in Bewegung setzt, wird durch die Fliehkraft die verschiebbar gelagerte Kette durch die angreifende Zentrifugalkraft auf die Reifenlauffläche verschoben.

Eine derartige Konstruktion mittels Bügeln erfordert einen erhöhten Material- und Produktions- bzw. Fertigungsaufwand, da unverhältnismäßig viele Teile zusammengefügt werden müssen. Auch hat es sich gezeigt, daß die Befestigungsstellen zwischen Tragarm und Bügel einem erhöhten Verschleiß unterliegen, wodurch es zu einem Ablösen des Bügels von dem Tragarm kommen kann. Hierbei löst sich die verschieblich gelagerte Kette und schlägt gegen den Radkasten. Es hat sich ferner gezeigt, daß bei bekannten Gleitschutzkonstruktionen ein Ausweichen des Gleitschutzes im Bereich der Standfläche nicht genügend leichtgängig ist, so daß der den Gleitschutz montierende Laie oft Montageschwierigkeiten hat.

Aufgabe der Erfindung ist es daher, einen Gleitschutz der eingangs genannten Art so zu verbessern, daß bei geringem Materialaufwand und einfacher Konstruktion ein Ausweichen des für die Standfläche vorgesehenen Gleitschutzbereiches leichtgängig ist, wobei zusätzlich die Funktionssicherheit des Gleitschutzes erhöht wird.

Diese Aufgabe wird erfindungsgemäß dadurch gelöst, daß der Arm in seiner der Haltevorrichtung abgewandten Seite eine quer zur Laufrichtung angeordnete fensterförmige längliche Materialaussparung hat, in der das einliegende Befestigungsende des Gleitschutzmittels quer zur Laufrichtung verschieblich einliegt.

Ein solcher Gleitschutz ermöglicht aufgrund der Langlöcher ein leichtes Ausweichen bzw. Verschieben des für die Standfläche vorgesehenen Gleitschutzbereichs, so daß derjenige, der den Gleitschutz montiert, diesen leicht von der Seite auf das Rad aufschieben kann, ohne daß ihn der unterste Bereich des Gleitschutzes behindert. Darüberhinaus hat diese Konstruktion den Vorteil, daß nach dem Anfahren der noch neben der Radlauffläche liegende Gleitschutzbereich leicht auf die Lauffläche gelangt.

Für eine einfache und sicher arbeitende Konstruktion wird vorgeschlagen, daß das Befestigungsende des Gleitschutzmittels ein hakenförmiges Kettenglied ist. Besonders vorteilhaft ist es, wenn die Längsöffnung bei im übrigen etwa gleichbleibender Breite auf dem der Haltevorrichtung abgewandten Ende eine Erweiterung aufweist. Hierdurch kann das in der Längsöffnung einliegende Befestigungsende, insbesondere das hakenförmige Kettenglied, in die Erweiterung hineingleiten und wird dort sicher, insbesondere einrastend, gehalten, so daß ein Zurückgleiten sicher verhindert wird.

Besonders vorteilhaft ist es, wenn das Gleitschutzmittel Stege aus Kunststoff aufweist, wobei der einem eine Längsöffnung aufweisenden Arm nächstliegendste Steg in Laufrichtung zweigeteilt ist. Auch wird vorteilhafterweise vorgeschlagen, daß nur zwei Arme, die einander benachbart sind, Längsöffnungen aufweisen, wobei jede Längsöffnung auf der Seite des Arms angeordnet ist, die dem benachbarten Arm zugekehrt ist.

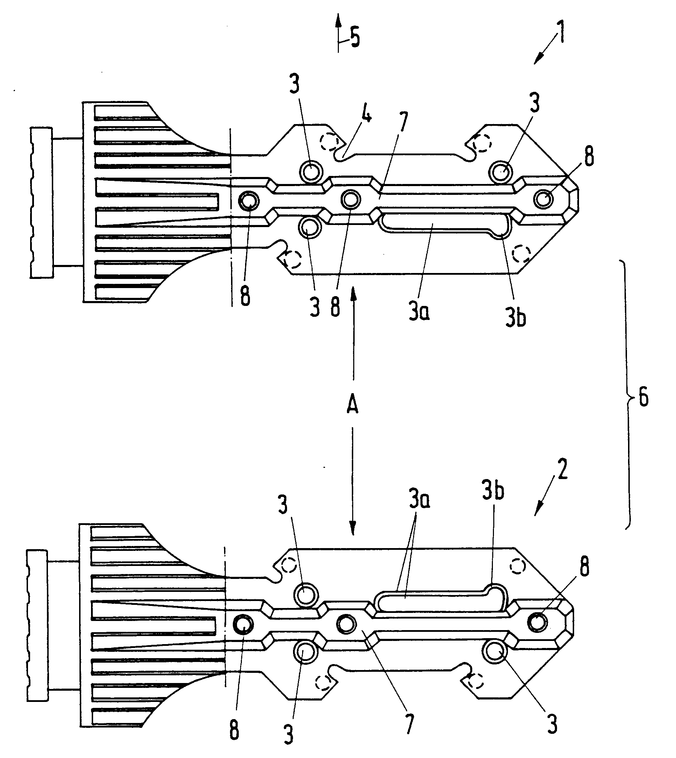

Ein Ausführungsbeispiel der Erfindung ist in der Zeichnung dargestellt und wird im folgenden näher beschrieben.

Die Zeichnung zeigt in einer Draufsicht zwei in einem Abschnitt A angeordnete Arme 1, 2, die zu beiden Seiten der Standfläche eines Kraftfahrzeugrades auf der nicht dargestellten Lauffläche des Rades zu liegen kommen. Der Abstand A ist hiebei in der Zeichnung kleiner dargestellt als in Wirklichkeit.

Der Gleitschutz weist drei, vier oder mehr Arme auf, die in gleichen Winkelabständen an einer zum Rad koaxialen seitlichen Scheibe verschwenkbar angelenkt sind, die in der Zeichnung nicht dargestellt ist und die an der Radaußenseite drehbeweglich und verschieblich gelagert ist.

Zwischen je zwei Armen 1, 2 ist ein Gleitschutzmittel befestigt, das aus Kettengliedern und dazwishen befindlichen Stegen und/oder Platten aus Kunststoff besteht. Dieses Gleitschutzmittel weist auf seinen den Armen nahen Enden hakenförmige Kettenglieder auf, die in Öffnungen 3 befestigt sind. Um ein Einhaken dieser hakenförmigen nicht dargestellten Kettenglieder zu erleichtern, befindet sich nahe jeder Öffnung 3 ein in den Rand des plattenförmigen Arms eingearbeiteter Schlitz 4, der gegenüber der Öffnung 3 in Laufrichtung 5 des Rades gesehen seitlich versetzt angeordnet ist.

Bei den Armen 1, 2, die den Zwischenraum 6 begrenzen, in dem die Standfläche des Kraftfahrzeugrades liegt, muß dafür gesorgt werden, daß das Gleitschutzmittel seitlich ausweichen kann, so daß dieser Zwischenraum 6 auch "Ausweichöffnung" genannt wird. Auf den dieser Ausweichöffnung 6 zugewandten Seite jedes Armes 1, 2 ist die der Haltevorrichtung abgewandte Öffnung 3 als eine Längsöffnung 3a ausgeführt, die quer zur Laufrichtung liegt und in der das in dieser Längsöffnung einliegende Befestigungsende des Gleitschutzmittels, insbesondere das hakenförmige Kettenglied, quer zur Laufrichtung verschieblich ist. Hierdurch ist das Gleitschutzmittel im Bereich des Zwischenraums 6 leicht zur Außenseite des Rades verschieblich, so daß während der Montage das Gleitschutzmittel im Bereich dieses Zischenraums 6 leicht ausweichen kann.

Die Längsöffnung 3a weist auf dem der Haltevorrichtung abgewandten Ende eine zum Zwischenraum 6 hin gerichtete Erweiterung 3b auf, in die das Befestigungsende hineinrutschen kann, sobald nach der Montage das Kraftfahrzeug anfährt. In dieser Erweiterung 3b ist damit das Gleitschutzmittel sicher gehalten, so daß es nicht zurück ausweichen kann.

Wie in der Zeichnung dargestellt, weist jeder Arm 1, 2 rippenförmige Vorsprünge 7 und Spikes 8 auf, um den Halt zur Straße zu verbessern.

Um die Verschieblichkeit des Befestigungsendes bzw. des hakenförmigen Kettengliedes in der Längsöffnung 3a zu verbessern, sind die Kunststoffstege bzw. Kunststoffplatten des Gleitschutzmittels, die nahe des Arms 1 bzw. des Arms 2 im Zwischenraum 6 liegen, zweigeteilt, so daß ein erster Steg- bzw. Plattenteil der der Haltevorrichtung abgewandt ist, gegenüber dem zweiten Steg- bzw. Plattenteil beweglich ist und damit ein Ausweichen des Gleitschutzmittels zur Seite hin nicht behindert.

## Patentansprüche

1. Gleitschutz für Fahrzeugräder mit einer an einer Seite der Radfelge oder der Radscheibe koaxial befestigten Haltevorrichtung, die durch über die Radlauffläche greifende quer zur Laufrichtung liegende Arme (1, 2) ein auf der Radlauffläche aufliegendes Gleitschutzmittel hält, wobei das Gleitschutzmittel auf der der Haltevorrichtung abgewandten Seite als auch auf der zugewandten Seite jeweils in einer Öffnung (3) des Arms (1, 2) gehalten ist und im Bereich der Reifenstandfläche zur Seite beweglich ist,
**dadurch gekennzeichnet,** daß der Arm (1, 2) in seiner der Haltevorrichtung abgewandten Seite eine quer zur Laufrichtung angeordnete fensterförmige längliche Materialaussparung hat, in der das einliegende Befestigungsende des Gleitschutzmittels quer zur Laufrichtung verschieblich einliegt.

2. Gleitschutz nach Anspruch 1,
**dadurch gekennzeichnet,** daß das Befestigungsende des Gleitschutzmittels ein hakenförmiges oder geschlossenes Kettenglied oder ein Formteil ist.

3. Gleitschutz nach Anspruch 1 oder 2,
**dadurch gekennzeichnet,** daß die Längsöffnung (3a) bei im übrigen etwa gleichbleibender Breite auf dem der Haltevorrichtung abgewandten Ende eine Erweiterung (3b) aufweist.

4. Gleitschutz nach einem der vorhergehenden Ansprüche,
**dadurch gekennzeichnet,** daß das Gleitschutzmittel Stege aus Kunststoff aufweist, wobei der einem Arm (1, 2) nächstliegendste Steg in Laufrichtung zweigeteilt ist.

5. Gleitschutz nach einem der vorhergehenden Ansprüche,
**dadurch gekennzeichnet,** daß nur zwei Arme (1, 2) die einander benachbart sind, Längsöffnungen (3a) aufweisen, wobei jede Längsöffnung (3a) auf der Seite des Arms (1, 2) angeordnet ist, die dem benachbarten Arm zugekehrt ist.

## Claims

1. A nonskid device for vehicle wheels, having a retaining device which is coaxially attached to one side of the wheel rim or the wheel disc and retains a nonskid means hearing against the wheel housing via arms (1, 2) extending transversely of the travelling direction and engaging over the wheel housing, the nonskid means being retained on both the side remote from the retaining device and also on the side adjacent thereto in an opening (3) in the arm (1, 2) and being laterally movable in the zone of the tyre standing surface, characterized in that the material of the side of the arm (1, 2) remote from the retaining device has a window-shaped elongate cutaway portion which is disposed transversely of the travelling direction and in which the inserted attaching end of the nonskid means is displaceably inserted transversely of the travelling direction.

2. A nonskid device according to claim 1, characterized in that the attaching end of the nonskid means is a hook-shaped or closed chain link or a moulded part.

3. A nonskid device according to claims 1 or 2, characterized in that with an otherwise constant width, the elongate opening (3a) has a widened portion (3b) at the end remote from the retaining device.

4. A nonskid device according to one of the preceding claims, characterized in that the nonskid means has plastics webs, the web closest to one arm (1, 2) being divided in two in the travelling direction.

5. A nonskid device according to one of the preceding claims, characterized in that only two adjacent arms (1, 2) have elongate openings (3a), each elongate opening (3a) being disposed on that side of the arm (1, 2) which faces the adjacent arm.

## Revendications

1. Dispositif antidérapant pour roues de véhicules, avec un dispositif de retenue fixé coaxialement sur un côté de la jante de roue ou du disque de roue qui porte, par des bras (1,2) disposés transversalement à la direction de marche, en prise au-delà de la surface de roulement de la roue, un moyen antidérapant en appui sur la surface de roulement de la roue, le moyen antidérapant étant maintenu du côté écarté du dispositif de retenue aussi bien que du côté tourné vers celui-ci respectivement dans une ouverture (3) du bras (1,2) et étant mobile latéralement dans la zone de la surface du montant du pneumatique,
caractérisé en ce que le bras (1,2) a, de son côté écarté du dispositif de retenue, un évidement de matière allongé en forme de fenêtre disposé transversalement à la direction de marche, dans lequel l'extrémité de fixation du moyen antidérapant incluse est montée coulissante transversalement à la direction de marche.

2. Dispositif antidérapant selon la revendication 1,
caractérisé en ce que l'extrémité de fixation du moyen antidérapant est un maillon de chaîne en forme de crochet ou fermé ou bien une pièce usinée.

3. Dispositif antidérapant selon la revendication 1 ou 2,
caractérisé en ce que l'ouverture longitudinale (3a) présente, pour une largeur sensiblement constante pour le reste, un élargissement (3b) à l'extrémité écartée du dispositif de retenue.

4. Dispositif antidérapant selon l'une des revendications précédentes,
caractérisé en ce que le moyen antidérapant présente des nervures en matière synthétique, la nervure immédiatement adjacente à un bras (1,2) est divisée en deux en direction de marche.

5. Dispositif antidérapant selon l'une des revendications précédentes,
caractérisé en ce que seulement deux bras (1,2) qui sont adjacents l'un à l'autre présentent des ouvertures allongées (1,2), chaque ouverture allongée (3a) étant disposée du côté du bras (1,2) qui est tourné vers le bras voisin.
